# EUROPEAN PATENT APPLICATION

(11) **EP 4 830 865 A1**
(43) Date of publication of application: **28.10.2026**
(21) Application number: 24916349.4
(22) Date of filing: 07.08.2024
(51) Int. Cl.: B23K 37/00, H01M 10/04

(54) **CONTROL SYSTEM AND METHOD FOR BATTERY CELL WELDING USING ADAPTER PIECE**

(30) Priority: 10.01.2024 CN 202410039585
(71) Applicant: Contemporary Amperex Technology Co., Limited, Ningde, Fujian 352100 (CN)
(72) Inventor: SHI, Deqiang, Ningde, Fujian 352100 (CN); WU, Runqi, Ningde, Fujian 352100 (CN); GUO, Jianfeng, Ningde, Fujian 352100 (CN); LAN, Bin, Ningde, Fujian 352100 (CN)
(74) Representative: Kraus & Lederer PartGmbB
(86) International application number: PCT/CN2024/110406
(87) International publication number: WO 2025/148293

(57) **Abstract**

The present application belongs to the technical field of batteries. Provided are a control system and method for battery cell welding using an adapter piece. The control system comprises: a first feeding apparatus, which is used for conveying a first top cover to a first pick-up position; a second feeding apparatus, which is used for conveying a second top cover to the first pick-up position during the process of the first feeding apparatus returning to a feeding position; a third feeding apparatus, which is used for conveying a first battery cell and a second battery cell to a second pick-up position; a conveying apparatus, which is used for conveying the first top cover, the second top cover, the first battery cell and the second battery cell to a welding apparatus; and the welding apparatus, which is used for welding the first top cover to the first battery cell and welding the second top cover to the second battery cell. In the present application, the control system realizes uninterrupted continuous feeding by means of two groups of feeding apparatuses, thereby shortening the waiting time for the feeding of top covers, and increasing the efficiency of a production line.

## Description

The present application claims priority to Chinese Patent Application No. 202410039585.1 filed with China National Intellectual Property Administration on January 10, 2024 and entitled "CONTROL SYSTEM AND CONTROL METHOD FOR CELL WELDING USING ADAPTING PIECE", which is incorporated herein by reference in its entirety.

### TECHNICAL FIELD

The present application relates to the technical field of batteries, and in particular, to a control system and a control method for cell welding using adapting pieces.

### BACKGROUND

With economic development, battery technology has become a major research direction in the field of new energy vehicles. The top cover and the cell are important components of a battery. Welding the cell and the top cover together through an adapting piece is an extremely important process in the production process of battery cells. Existing welding devices have a simple structure and relatively low production efficiency. How to efficiently complete welding of the cell to the top cover is currently a problem to be solved.

### SUMMARY

In view of the above technical problems, embodiments of the present application provide a control system and a control method for cell welding using adapting pieces, which maximize utilization of the production takt time and production capacity of the entire device, thereby improving production efficiency.

In a first aspect, the embodiments of the present application provide a control system for cell welding using adapting pieces. The control system includes:
a first material feeding device, configured to convey a first top cover to a first material pickup position;
a second material feeding device, configured to convey a second top cover to the first material pickup position during a process in which the first material feeding device returns to a material feeding position;
a third material feeding device, configured to convey a first cell and a second cell to a second material pickup position;
a conveying device, configured to transport the first top cover, the second top cover, the first cell, and the second cell to a welding device; and
the welding device, configured to weld the first top cover to the first cell and weld the second top cover to the second cell.

Based on the above technical solution, after feeding of the top covers and the cells is completed, the top covers and the cells are transported to the welding device by the conveying device, and the top covers and the cells are welded by the welding device. Both the first material feeding device and the second material feeding device are capable of feeding the top covers. During a process in which the first material feeding device completes feeding of the first top cover, removes an empty material tray, and loads a next top cover, the second material feeding device is capable of conveying the second top cover to the first material pickup position. Continuous uninterrupted feeding is achieved through two sets of material feeding devices, which reduces waiting time for top cover feeding and improves production line efficiency.

In some embodiments, the conveying device is annular, and the first material feeding device, the second material feeding device, the third material feeding device, and the welding device are sequentially disposed on different side surfaces of the conveying device in a running direction of the conveying device. In this way, through the reasonable arrangement of different stations, the cells and the top covers are smoothly subjected to automated welding, and space occupied by the entire production line is reduced.

The conveying device may be a magnetic drive guide rail. The magnetic drive guide rail may also be referred to as a magnetic levitation guide rail. Through the magnetic drive guide rail, incoming top covers and cells will be rapidly transferred to a welding station for welding using adapting pieces, thereby reducing time waste generated during the material transfer process. In addition, compared with a conventional belt conveyor line, the magnetic drive guide rail has a higher speed and less wear caused by long-term operation.

In some embodiments, a first tray and a second tray are disposed on the conveying device, the first tray is configured to fix the first top cover and the first cell, the second tray is configured to fix the second top cover and the second cell, and the first tray and the second tray sequentially pass through the first material pickup position; and after the first tray receives the first top cover and the second tray receives the second top cover, the first tray and the second tray sequentially pass through the second material pickup position, the first tray receives the first cell, and the second tray receives the second cell. Fixing structures corresponding to shapes of the top covers and the cells are formed on the trays, thereby accurately and stably fixing the top covers and the cells on the trays of the conveying device, such that the cell adapting pieces and the top covers are precisely matched, occurrence of welding NG products caused by insufficient matching precision is avoided, output of NG cells is reduced, and thus production efficiency is improved and labor and material costs are saved.

In some embodiments, the control system further includes a coding device and a coding carrier belt, the coding carrier belt is disposed between the first material pickup position and the conveying device, the coding device is disposed in a running direction of the coding carrier belt, and the coding device is configured to code information of the first top cover and code information of the second top cover. By means of coding, subsequent welding, tracing, and production management are facilitated.

In some embodiments, the control system further includes: a first detection device, configured to detect whether the coded first top cover and the coded second top cover are conforming products. The coding carrier belt sequentially passes through the coding device and the first detection device in the running direction.

In some embodiments, the control system further includes: a first material unloading device, configured to place non-conforming coded top covers detected by the first detection device, and the first material unloading device is disposed at a tail portion of the coding carrier belt and adjacent to the coding carrier belt. After coding of the top covers is completed, the first detection device is used to detect the top covers, and NG top covers generated during coding are timely removed and placed on the first material unloading device, thereby avoiding a situation in which, during subsequent stacking of cells, OK cells are stacked on NG top covers and become NG products, avoiding waste of OK cells, and facilitating NG product detection.

In some embodiments, the control system further includes: a first gripping device, configured to place the first top cover and the second top cover located at the first material pickup position onto a coding carrier belt; and a second gripping device, configured to transfer the coded first top cover and the coded second top cover to the conveying device. The first gripping device and the second gripping device are both gripping robots. Transfer of the top covers among different positions is achieved through the robots, thereby providing greater flexibility and enabling adaptation to incoming materials at different heights and different frequencies.

In some embodiments, the first top cover or the second top cover each includes a first surface and a second surface, the first surface is a surface facing upward in a vertical direction during coding, and the second surface is a surface facing upward in the vertical direction during welding; and the control system further includes: a flipping mechanism, configured to simultaneously flip the coded first top cover and the coded second top cover by 180°, where after flipping, the second surface is a surface facing upward in the vertical direction; and the second gripping device, specifically configured to transfer the flipped coded first top cover and the flipped coded second top cover to the conveying device, where the flipping mechanism is disposed below the second gripping device. By using the flipping mechanism to perform a flipping operation on the coded top covers, process requirements for both top cover welding and top cover coding are simultaneously satisfied.

In some embodiments, the flipping mechanism is specifically configured to simultaneously flip the coded first top cover and the coded second top cover. In this way, production line efficiency is improved.

In some embodiments, a flipping angle of the flipping mechanism is 180°.

In some embodiments, the control system further includes a first dust removal device and a second material unloading device; the second material unloading device is configured to transport the first cell welded to the first top cover; the first dust removal device is disposed on a transport path of the second material unloading device; and the first dust removal device is configured to clean the first cell welded to the first top cover. The dust removal device is used to clean welding slag after welding and floating dust generated during material transfer, such that the cleanliness of the cell is ensured, and the impact of welding slag and floating dust on the quality of the cell will be avoided.

In some embodiments, the control system further includes a second dust removal device and a third material unloading device; the third material unloading device is configured to transport the second cell welded to the second top cover; the second dust removal device is disposed on a transport path of the third material unloading device; and the second dust removal device is configured to clean the second cell welded to the second top cover. By providing two sets of dust removal devices and two sets of cell unloading devices, cell cleaning and unloading will be completed more efficiently, thereby improving production line efficiency.

In some embodiments, the control system further includes: a third gripping device, configured to place non-conforming cells welded to top covers from the second material unloading device in a first non-conforming product area, and place non-conforming cells welded to top covers from the third material unloading device in a second non-conforming product area; and the first non-conforming product area and the second non-conforming product area are vertically arranged in an overlapping manner, and the first non-conforming product area and the second non-conforming product area are located at tail portions of the transport paths of the second material unloading device and the third material unloading device and are arranged perpendicular to the second material unloading device and the third material unloading device. By distinguishing the first non-conforming product area from the second non-conforming product area, NG conditions of cells on two lines corresponding to the second material unloading device and the third material unloading device will be accurately distinguished, thereby facilitating tracing and device detection. The vertically overlapped arrangement of the first non-conforming product area and the second non-conforming product area saves space required for NG carrier belts and reserve more space for subsequent model changeover in the factory building.

In some embodiments, the third gripping device is further configured to place conforming cells welded to top covers from the second material unloading device and the third material unloading device in a conforming product area. The conforming product area is a servo-driven movable buffer position.

In a second aspect, the embodiments of the present application provide a control method for cell welding using adapting pieces. The method includes:
conveying, by a first material feeding device, a first top cover to a first material pickup position;
conveying, by a second material feeding device, a second top cover to the first material pickup position during a process in which the first material feeding device returns to a material feeding position;
receiving, by a conveying device, the first top cover and the second top cover, and transporting the first top cover and the second top cover to a second material pickup position;
conveying, by a third material feeding device, a first cell and a second cell to the second material pickup position;
receiving, by the conveying device, the first cell and the second cell at the second material pickup position, and sequentially transporting the first top cover, the first cell, the second top cover, and the second cell to a welding device; and
welding, by the welding device, the first top cover to the first cell, and welding the second top cover to the second cell.

Based on the above technical solution, after feeding of the top covers and the cells is completed, the top covers and the cells are transported to the welding device by the conveying device, and the top covers and the cells are welded by the welding device. Both the first material feeding device and the second material feeding device are capable of feeding the top covers. During a process in which the first material feeding device completes feeding of the first top cover, removes an empty material tray, and loads a next top cover, the second material feeding device is capable of conveying the second top cover to the first material pickup position. Continuous uninterrupted feeding is achieved through two sets of material feeding devices, which reduces waiting time for top cover feeding and improves production line efficiency.

In some embodiments, the method further includes: controlling a coding device to perform coding on the first top cover and on the second top cover before the first top cover and the second top cover are transferred to the conveying device. By means of coding, subsequent welding, tracing, and production management are facilitated.

In some embodiments, the method further includes: detecting, by a first detection device, whether the coded first top cover and the coded second top cover are conforming products.

In some embodiments, the method further includes: when a coded top cover is a conforming product, transporting, by the conveying device, the coded top cover to the welding device; and when a coded top cover is a non-conforming product, transferring the non-conforming coded top cover to a first material unloading device. After coding of the top covers is completed, the first detection device is used to detect the top covers, and NG top covers generated during coding are timely removed and placed on the first material unloading device, thereby avoiding a situation in which, during subsequent stacking of cells, OK cells are stacked on NG top covers and become NG products, avoiding waste of OK cells, and facilitating NG product detection.

In some embodiments, the coding device is disposed in a running direction of a coding carrier belt, and the method further includes: placing, by a first gripping device, the first top cover and the second top cover located at the first material pickup position onto the coding carrier belt; and transferring, by a second gripping device, the coded first top cover and the coded second top cover to the conveying device.

In some embodiments, the first top cover or the second top cover each includes a first surface and a second surface, the first surface is a surface facing upward in a vertical direction during coding, and the second surface is a surface facing upward in the vertical direction during welding; and the method further includes: after performing coding on the first top cover and the second top cover, simultaneously flipping, by a flipping mechanism, the coded first top cover and the coded second top cover, where after flipping, the second surface is a surface facing upward in the vertical direction. By using the flipping mechanism to perform a flipping operation on the coded top covers, process requirements for both top cover welding and top cover coding are simultaneously satisfied.

In some embodiments, flipping, by the flipping mechanism, the coded first top cover and the coded second top cover includes: simultaneously flipping, by the flipping mechanism, the coded first top cover and the coded second top cover.

In some embodiments, a flipping angle of the flipping mechanism is 180°.

In some embodiments, the method further includes: transporting, by a second material unloading device, the first cell welded to the first top cover to a first dust removal device; and cleaning, by the first dust removal device, the first cell welded to the first top cover. The dust removal device is used to clean welding slag after welding and floating dust generated during material transfer, such that the cleanliness of the cell is ensured, and the impact of welding slag and floating dust on the quality of the cell will be avoided.

In some embodiments, the method further includes: transporting, by a third material unloading device, the second cell welded to the second top cover to a second dust removal device; and cleaning, by the second dust removal device, the second cell welded to the second top cover. By providing two sets of dust removal devices and two sets of cell unloading devices, cell cleaning and unloading will be completed more efficiently, thereby improving production line efficiency.

In some embodiments, the method further includes: detecting whether the first cell welded to the first top cover or the second cell welded to the second top cover is a conforming product; when the first cell welded to the first top cover is a non-conforming product, placing, by a third gripping device, the first cell welded to the first top cover in a first non-conforming product area; when the second cell welded to the second top cover is a non-conforming product, placing, by the third gripping device, the second cell welded to the second top cover in a second non-conforming product area; and when the first cell welded to the first top cover or the second cell welded to the second top cover is a conforming product, placing, by the third gripping device, the first cell welded to the first top cover or the second cell welded to the second top cover in a conforming product area. By distinguishing the first non-conforming product area from the second non-conforming product area, NG conditions of cells on two lines corresponding to the second material unloading device and the third material unloading device will be accurately distinguished, thereby facilitating tracing and device detection.

In a third aspect, the embodiments of the present application further provide a device for cell welding using adapting pieces. The device includes a memory and a processor, the memory stores one or more computer programs, and the processor, when executing the one or more computer programs, implements the method according to the second aspect.

In a fourth aspect, the embodiments of the present application further provide a computer-readable storage medium. The computer-readable storage medium stores one or more computer instructions, and the one or more computer instructions, when executed on a computer, cause the computer to perform the method according to the second aspect.

In a fifth aspect, the embodiments of the present application further provide a computer program product. The computer program product includes one or more computer programs, and the computer program product, when running on a computer, causes the computer to implement the method according to the second aspect.

### BRIEF DESCRIPTION OF THE DRAWINGS

To more clearly illustrate the technical solutions in embodiments of the present application, the drawings required for illustrating the embodiments or description of the prior art are briefly described below. Apparently, the drawings in the following description illustrate merely some embodiments of the present application, and those of ordinary skill in the art may still derive other drawings from these drawings without creative efforts.
FIG. 1 is a schematic structural diagram of a product to be welded according to an embodiment of the present application;
FIG. 2 is a schematic structural diagram of a control system for cell welding using adapting pieces according to an embodiment of the present application;
FIG. 3 is a schematic structural diagram of a top cover feeding device according to an embodiment of the present application;
FIG. 4 is a schematic structural diagram of a flipping mechanism according to an embodiment of the present application;
FIG. 5 is a schematic diagram of a conveying device according to an embodiment of the present application;
FIG. 6 is a schematic structural diagram of an unloading buffer area according to an embodiment of the present application; and
FIG. 7 is a schematic flowchart of a control method for cell welding using adapting pieces according to an embodiment of the present application.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, the technical terms such as "first" and "second" are only used to distinguish different objects and should not be interpreted as indicating or implying the relative importance or implicitly indicating the number, specific order, or priority of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

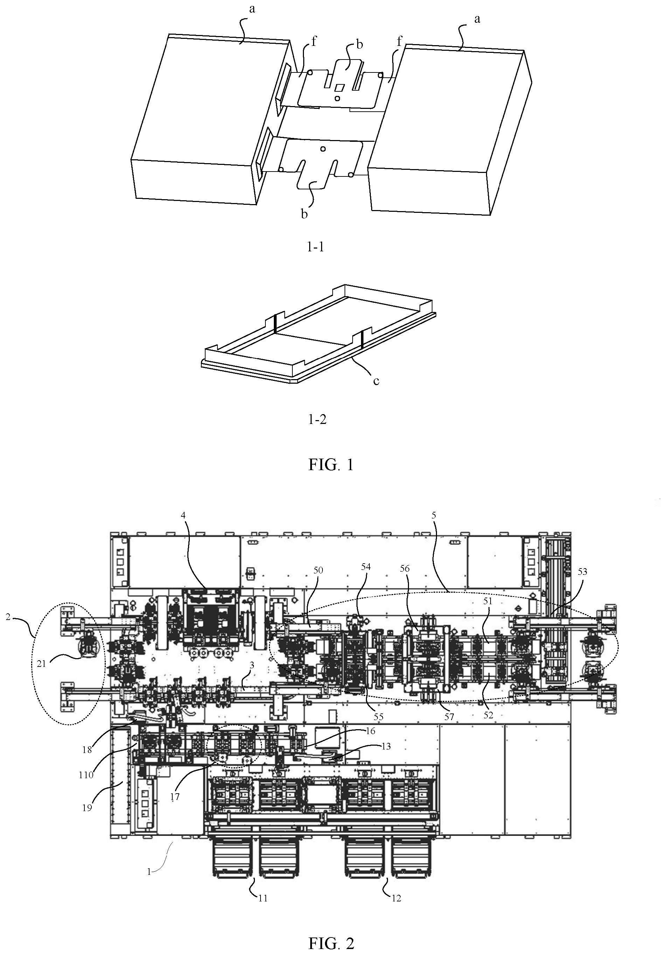

With economic development, battery technology has become a major research direction in the field of new energy vehicles. The top cover and the cell are important components of a battery. During the production process of lithium batteries, information of the top cover is required to be recorded by code marking, and the code-marked top cover and the cell with the A side and the B side opened are required to be stacked together. After an adapting piece of the cell is aligned with the top cover, stacking is performed, and the adapting piece of the cell is welded to the top cover. FIG. 1 illustrates a schematic diagram of a product to be welded. As shown by 1-1 in FIG. 1, a schematic diagram of cells and adapting pieces before welding is illustrated. Two cells a are symmetrically arranged, and an adapting piece b is pre-welded between tabs f of the cells a. As shown by 1-2 in FIG. 1, a schematic diagram of a top cover before welding is illustrated. The top cover c is to be disposed between the two cells a and is to be welded and fixed to the adapting pieces.

Existing welding devices have a simple structure, a low conveying rate, and relatively low production efficiency, and are difficult to satisfy the continuously increasing production speed requirements of adapting pieces. In addition, competition in the lithium battery industry is becoming increasingly fierce, and various parties have increasingly stringent requirements on the output and quality of lithium battery products. Therefore, how to efficiently complete welding of the cell to the top cover is currently a problem to be solved.

Accordingly, the present application provides a control system, a control method, and a device for cell welding using adapting pieces. By combining various material feeding gantry grippers, clamping jaws, flipping mechanisms, gripping robots, conveyor belts, and magnetic drive guide rails, more complicated transmission work of cells with adapting pieces and top covers will be performed, thereby achieving rapid transfer of incoming cells and top covers among different stations, and achieving maximized utilization of the production takt time and production capacity of the entire device.

FIG. 2 illustrates a schematic structural diagram of a control system for cell welding using adapting pieces according to an embodiment of the present application. The control system according to the embodiments of the present application includes a top cover feeding device 1, a cell feeding device 2, a conveying device 3, a welding device 4, and a material unloading device 5. The top cover feeding device 1 is configured to feed top covers, the cell feeding device 2 is configured to feed cells, the conveying device 3 is configured to receive the fed top covers and cells and convey the top covers and the cells to the welding device 4, the welding device 4 welds the top covers to the cells, and the material unloading device 5 unloads the welded cells.

The conveying device 3 is annular, and the top cover feeding device 1, the cell feeding device 2, the welding device 4, and the cell unloading device 5 are sequentially disposed on four sides of the conveying device 3. Through the reasonable arrangement of different stations, the cells and the top covers are smoothly subjected to automated welding, and space occupied by the entire production line is reduced.

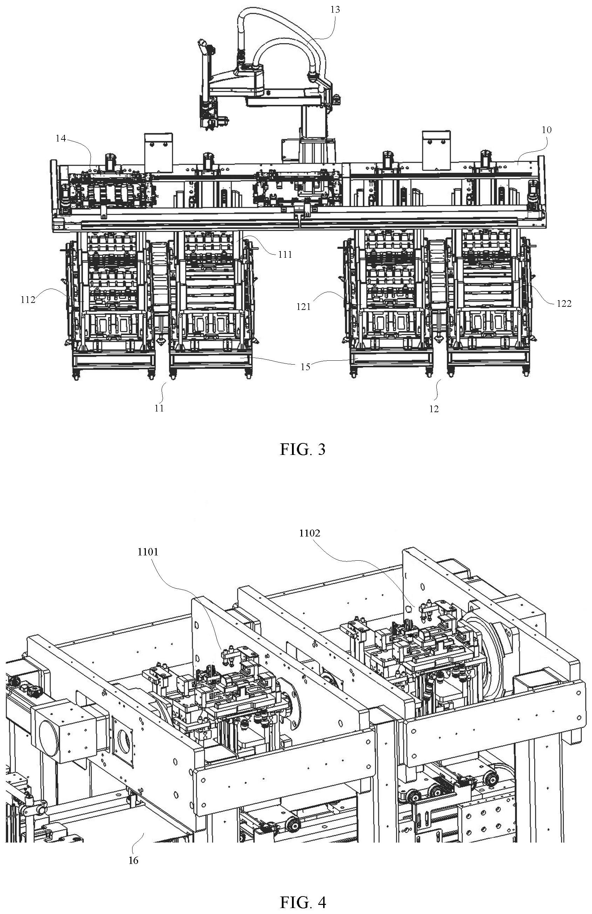

Further, referring to FIGs. 2 and 3, FIG. 3 illustrates a schematic structural diagram of a top cover feeding device 1 according to an embodiment of the present application. In the embodiments of the present application, the top cover feeding device 1 includes a material feeding rack 10, a first material feeding device 11, a second material feeding device 12, a first gripping robot 13, a transverse movement servo 14, and a material feeding trolley 15. The top covers are placed in material trays and stacked on the material feeding trolley 15 to continuously convey the top covers to the first material feeding device 11 and the second material feeding device 12. The material feeding trolley may be of a well-known structure, and may be detached from the main body structure of the top cover feeding device. The top portion of the material feeding rack 10 is provided with a notch, the material tray passes through the notch, and the transverse movement servo 14 reciprocates at the notch of the material feeding rack 10. The material feeding trolley 15 is disposed at the bottom of the material feeding rack 10, the position where the material feeding trolley 15 cooperates with the first material feeding device 11 is a material feeding position corresponding to the first material feeding device 11, and the position where the material feeding trolley 15 cooperates with the second material feeding device 12 is a material feeding position corresponding to the second material feeding device 12.

Preferably, the first material feeding device 11 includes a material feeding area 111 and a material unloading area 112. The material feeding area 111 employs a roller conveyor line to move a material tray loaded with the first top covers delivered by the material feeding trolley 15 to an A-group material tray pickup position, and an A-group lifting servo lifts the material tray loaded with the first top covers to the height of the A-group transverse movement servo 14. Then, a fixing cylinder of the A-group transverse movement servo 14 extends, and a fixing suction cup performs vacuum suction to fix the material tray loaded with the first top covers. The transverse movement servo 14 transversely moves the material tray loaded with the first top covers to a first material pickup position corresponding to a position below the first gripping robot 13. The first gripping robot 13 grips the first top covers on the material tray and places the first top covers at a next position, for example, on the conveying device 3 or on a coding carrier belt described subsequently. After gripping of the first top covers in the current material tray is completed, the empty material tray is moved to an A-group unloading position by the A-group transverse movement servo 14, the empty material tray is transferred onto the roller conveyor line by the lifting servo, and the roller conveyor line moves downward to complete unloading of the empty material tray.

The second material feeding device 12 includes a material feeding area 121 and a material unloading area 122. During a process in which the first material feeding device 11 completes feeding of the first top covers, removes the empty material tray, and prepares to transport a material tray loaded with next top covers, the material feeding area 121 employs a roller conveyor line to move a material tray loaded with the second top covers delivered by the material feeding trolley 15 to a B-group material tray pickup position, and a B-group lifting servo lifts the material tray loaded with the second top covers to the height of the B-group transverse movement servo 14. Then, a fixing cylinder of the B-group transverse movement servo 14 extends, and a fixing suction cup performs vacuum suction to fix the material tray loaded with the second top covers. The transverse movement servo 14 transversely moves the material tray loaded with the second top covers to the first material pickup position corresponding to a position below the first gripping robot 13. Furthermore, the first gripping robot 13 grips the second top covers on the material tray and places the second top covers at a next position.

It should be understood that in the embodiments of the present application, only the case where the left side in FIG. 3 is the first material feeding device and the right side is the second material feeding device is illustrated, but the present application is not limited thereto.

In the embodiments of the present application, a combination of servo shafts and roller conveyor lines is utilized to transport the material trays carrying the top covers to the first material pickup position, and continuous uninterrupted feeding is achieved by two sets of material feeding devices (the first material feeding device 11 and the second material feeding device 12). During a process in which the first material feeding device 11 completes feeding of the first top covers, removes the empty material tray, and loads next top covers, the first gripping robot 13 does not wait, but instead grips the second top covers delivered by the second material feeding device 12 and places the second top covers at the next position. During a process of picking and placing the second top covers, the first material feeding device 11 completes operations of releasing the empty material tray and picking materials, thereby reducing waiting time for the first gripping robot 13 to grip the top covers and improving production line efficiency.

With continued reference to FIG. 2, preferably, the top cover feeding device 1 may further include a coding carrier belt 16, a coding device 17, and a second gripping robot 18. The running direction of the coding carrier belt 16 is arranged parallel to the moving direction of the transverse movement servo 14. The head end in the running direction of the coding carrier belt 16 corresponds to the first gripping robot 13, the tail end in the running direction of the coding carrier belt 16 corresponds to the second gripping robot 18, and the coding device 17 is disposed on the coding carrier belt 16. The first gripping robot 13 grips the first top cover from the first material pickup position and transfers the first top cover to the coding carrier belt 16. The coding carrier belt 16 transports the first top cover to the coding device 17, and the coding device 17 codes information of the first top cover, facilitating subsequent welding, tracing, and production management. The second gripping robot 18 transfers the coded first top cover onto the conveying device 3. Similarly, the coding device 17 also codes information of the second top cover, and the second gripping robot 18 transfers the coded second top cover onto the conveying device 3, which will not be repeated herein. The first gripping robot corresponds to the first gripping device, and the second gripping robot corresponds to the second gripping device.

In some embodiments, two coding devices 17 may be provided, such that coding is simultaneously performed on the first top cover and the second top cover.

With continued reference to FIG. 2, preferably, the top cover feeding device 1 may further include a first detection device and a top cover unloading carrier belt 19 (also referred to as an NG top cover carrier belt, corresponding to the first material unloading device). The top cover unloading carrier belt 19 is arranged perpendicular to the coding carrier belt 16. The first detection device is disposed on the coding carrier belt 16, and between the coding device 17 and the second gripping robot 18, and the first detection device is configured to detect whether the coded top cover is a conforming product. After the coding device 17 performs coding on the first top cover, the first detection device is used to detect the first top cover. When the first top cover is a conforming (OK) product, the second gripping robot 18 grips the first top cover and places the first top cover onto the conveying device 3, such that the first top cover is further transferred to a cell loading station. When the first top cover is a non-conforming (NG) product, the second gripping robot 18 grips the first top cover and places the first top cover onto the top cover unloading carrier belt 19, such that the first top cover is removed from the production line. The detection of the second top cover is similar to that of the first top cover, which will not be repeated herein. In the embodiments of the present application, after coding of the top cover is completed, the NG top cover generated during coding is timely removed and placed onto the NG top cover carrier belt by using a robot, thereby avoiding a situation in which, during subsequent stacking of cells, OK cells are stacked on NG top covers and become NG products, avoiding waste of OK cells, and facilitating NG product detection.

It should be noted that the first detection device may be a charge-coupled device (CCD) camera.

In some embodiments, the first detection device may also be disposed on the second gripping robot 18, and the first detection device performs detection after the second gripping robot 18 grips the top cover.

Further, referring to FIGs. 2 and 4, preferably, the top cover feeding device 1 may further include a flipping mechanism 110. The flipping mechanism 110 is disposed at the tail end of the coding carrier belt 16 and is located below the second gripping robot 18. The coding carrier belt 16 sequentially passes through the first gripping robot 13, the coding device 17, the first detection device, and the flipping mechanism 110 in the transport direction. The flipping mechanism 110 is configured to flip the coded first top cover and the coded second top cover. When the coded top cover reaches the flipping mechanism 110, the flipping mechanism 110 grips the coded top cover and flips the coded top cover. After flipping is completed, the second gripping robot 18 grips the flipped coded top cover, and places the coded top cover onto the NG carrier belt or the conveying device 3 based on the detection result of the first detection device.

Due to production process requirements, the direction for coding the top cover is different from the direction for performing welding using adapting pieces. For example, the top cover may include an A surface and a B surface, coding is performed on the A surface, and welding is performed on the B surface. During coding, the A surface faces upward in the vertical direction, while during welding, the B surface faces upward in the vertical direction. Therefore, a flipping operation is required to be performed on the coded top cover to be welded. In the embodiments of the present application, by using the flipping mechanism 110 to perform a flipping operation on the coded top cover, process requirements for both top cover welding and top cover coding are simultaneously satisfied. The angle between the A surface and the B surface may be 180° or 90°, which is not limited in the present application. Correspondingly, the flipping angle of the flipping mechanism 110 may be 180° or 90°.

FIG. 4 is a schematic structural diagram of a flipping mechanism 110 according to an embodiment of the present application. The flipping mechanism 110 includes two sets of flipping assemblies, i.e., a first flipping assembly 1101 and a second flipping assembly 1102. The first flipping assembly 1101 and the second flipping assembly 1102 implement flipping through a rotating shaft. The first flipping assembly 1101 includes a first clamping portion, and the second flipping assembly 1102 includes a second clamping portion. According to an upper side and a lower side of the rotating shaft divided by a direction perpendicular to the coding carrier belt 16, the first clamping portion and the second clamping portion are located on the same side, for example, the lower side. When the first top cover and the second top cover reach a position below the flipping mechanism 110, the first clamping portion clamps the first top cover, and the second clamping portion clamps the second top cover, thereby achieving simultaneous flipping of the first top cover and the second top cover. The second gripping robot 18 may include two clamping jaws arranged in parallel in the horizontal direction, and is capable of simultaneously gripping the first top cover and the second top cover and place the first top cover and the second top cover onto the conveying device 3, thereby achieving rapid transfer of the top covers.

Further, the first flipping assembly 1101 may further include a third clamping portion, and the second flipping assembly 1102 may further include a fourth clamping portion. The third clamping portion and the fourth clamping portion are located on the same side. The first clamping portion and the third clamping portion are disposed opposite to each other, and the second clamping portion and the fourth clamping portion are disposed opposite to each other. After the first clamping portion clamps the first top cover and the second clamping portion clamps the second top cover, the flipping mechanism 110 performs upward and downward flipping, such that the second gripping robot 18 grips the first top cover and the second top cover from the first clamping portion and the second clamping portion. In this case, the third clamping portion and the fourth clamping portion flip from the upper side to the lower side, and are capable of continuing to clamp subsequent top covers. Therefore, when the first clamping portion and the second clamping portion flip to the lower side to clamp new top covers, the second gripping robot 18 is capable of gripping the subsequent top covers from the third clamping portion and the fourth clamping portion, which improves top cover conveying efficiency and reduces waiting time of the second gripping robot 18.

It should be understood that in some embodiments, the coding position 17 may be disposed on a side surface of the top cover, and the welding surface always faces upward, such that the flipping mechanism 110 may be omitted. In some embodiments, the flipping mechanism 110 includes the first flipping assembly 1101 or the second flipping assembly 1102, such that the first top cover and the second top cover are sequentially flipped, and the second gripping robot 18 sequentially transfers the first top cover and the second top cover.

With continued reference to FIG. 2, the cell feeding device 2 includes a conveyor belt (not shown in the figure) and a first gantry gripper 21. The conveyor belt may be disposed parallel to and adjacent to the top cover unloading carrier belt 19. The cell feeding device 2 uses the conveyor belt to convey a first cell and a second cell completed in the previous process to a cell feeding gantry station (a second material pickup position), grips the cells by using the first gantry gripper 21, and sequentially places the first cell and the second cell onto the conveying device 3.

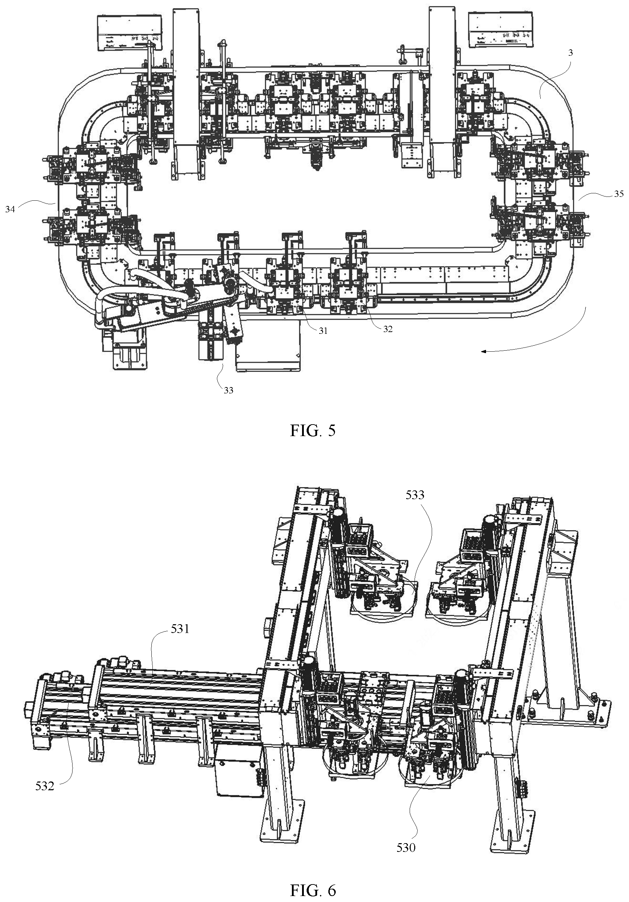

Further, referring to FIGs. 2 and 5, FIG. 5 is a schematic diagram of a conveying device according to an embodiment of the present application. A first tray 31 and a second tray 32 are placed on the conveying device 3, and fixing structures corresponding to shapes of the top covers and the cells are formed on the trays. The top covers are placed in grooves of the trays configured to accommodate the top covers, and the cells are placed in grooves of the trays configured to accommodate the cells for fixing the top covers and the cells, thereby achieving precise matching. When the conveying device 3 carrying the first tray 31 and the second tray 32 reaches a top cover pickup position 33 corresponding to the top cover feeding device 1, the second gripping robot 18 places the coded first top cover and the coded second top cover into the fixing structures of the first tray 31 and the second tray 32, respectively; or when the conveying device 3 carrying the first tray 31 and the second tray 32 reaches the first material pickup position, the first gripping robot 13 places the first top cover and the second top cover into the fixing structures of the first tray 31 and the second tray 32, respectively. After receiving the top covers, the conveying device 3 continues to move, and the trays are transferred to a cell feeding position 34 corresponding to the cell feeding device 2. The first gantry gripper 21 moves the first cell into the first tray 31 in which the first top cover has been placed, and moves the second cell into the second tray 32 in which the second top cover has been placed. The conveying device 3 continues to convey the top covers and the cells to the welding device 4 along the conveying path. In the embodiments of the present application, by forming fixing structures corresponding to the shapes of the top covers and the cells in the trays, and by utilizing a combination of the second gripping robot, the flipping mechanism, the conveying device, and the conveyor belt and the first gantry gripper in the cell feeding device, the coded top covers are accurately and stably fixed on the trays of the conveying device, and the cells are accurately and stably fixed on the trays on which the top covers have already been loaded, such that the adapting pieces and the top covers are precisely matched, occurrence of welding NG products caused by insufficient matching precision is avoided, output of NG cells is reduced, and thus production efficiency is improved and labor and material costs are saved.

Further, the conveying device 3 is a magnetic drive guide rail, which may also be referred to as a magnetic levitation guide rail. Through the magnetic drive guide rail, incoming top covers and cells are rapidly transferred to a welding station for welding using adapting pieces. In the embodiments of the present application, by using the magnetic drive guide rail, the trays are transferred among different stations at a speed as high as possible, thereby reducing time waste generated during the material transfer process. In addition, compared with a conventional belt conveyor line, the magnetic drive guide rail has a higher speed and less wear caused by long-term operation.

In some embodiments, the above control system further includes a correction mechanism, and the correction mechanism is disposed in the running direction of the magnetic drive guide rail. After receiving incoming top covers and cells, the magnetic drive guide rail conveys trays fixed with the top covers and the cells to the correction mechanism, and the correction mechanism corrects positions of the top covers and the cells, thereby further improving matching precision.

After position correction is performed, the magnetic drive guide rail conveys the trays fixed with the top covers and the cells to the welding device 4 for welding, where the welding process is laser welding, and specifically, the welding process is galvanometer welding. The welding device 4 may be provided with two welding positions to simultaneously weld the top cover to the cell in the first tray and the top cover to the cell in the second tray. After welding of the adapting pieces and the top covers is completed, the magnetic drive guide rail transfers the trays to a post-welding cell pickup position 35 corresponding to the material unloading device 5, and a second gantry gripper of the material unloading device 5 grips the welded cells from the trays on the magnetic drive guide rail and transfers the welded cells onto the trays of the material unloading device 5 for subsequent processing. After the cells are removed, the trays on the magnetic drive guide rail move to buffer positions to wait for a next round of top cover feeding. The magnetic drive guide rail provides two buffer positions, and two trays are transferred on the magnetic drive guide rail as one group. If the second gantry gripper does not timely remove the cells, the cells will be manually removed at the buffer positions.

With continued reference to FIG. 2, the material unloading device 5 includes a second gantry gripper 50, a second material unloading device 51, a third material unloading device 52, and an unloading buffer area 53. The second material unloading device 51 and the third material unloading device 52 both transport cells through carrier belts. The second material unloading device 51 and the third material unloading device 52 are arranged adjacent and parallel to each other, and the second material unloading device 51 and the third material unloading device 52 are arranged parallel to the coding carrier belt 16. The second gantry gripper 50 is disposed between the magnetic drive guide rail and the second material unloading device 51 and the third material unloading device 52. After welding of the adapting pieces and the top covers is completed, the magnetic drive guide rail transfers the trays to the post-welding cell pickup position 35, and the second gantry gripper 50 grips the welded first cells from the first tray on the magnetic drive guide rail and places the welded first cells into a tray on the carrier belt of the second material unloading device 51. Meanwhile, the second gantry gripper 50 grips the welded second cells from the second tray on the magnetic drive guide rail and places the welded second cells into a tray on the carrier belt of the third material unloading device 52. Head ends of the second material unloading device 51 and the third material unloading device 52 are provided with sensors, and the sensors are used to determine whether welded cells are placed on the carrier belts. If yes, the carrier belts move forward by one unit to move a next group of empty trays to the post-welding cell pickup position. The carrier belts continue to move forward in the running direction, and finally convey the welded first cells and the welded second cells to the unloading buffer area 53.

With continued reference to FIG. 2, preferably, in the embodiments of the present application, the above material unloading device 5 further includes a first dust removal device 54 and a second dust removal device 55. The first dust removal device 54 is disposed on the transport path of the second material unloading device 51 and is configured to clean the cells (e.g., the welded first cells) on the second material unloading device 51. The second dust removal device 55 is disposed on the transport path of the third material unloading device 52 and is configured to clean the cells (e.g., the welded second cells) on the third material unloading device 52. The dust removal device is used to clean welding slag after welding and floating dust generated during material transfer, such that the cleanliness of the cell is ensured, and the impact of welding slag and floating dust on the quality of the cell will be avoided.

With continued reference to FIG. 2, preferably, in the embodiments of the present application, the above control system further includes a dispensing device 56 and a dispensing device 57. The dispensing device 56 is disposed on the transport path of the second material unloading device 51, and the dispensing device 57 is disposed on the transport path of the third material unloading device 52. The dispensing device 56 and the dispensing device 57 each include a pre-dispensing CCD station, a dispensing station, and a post-dispensing CCD station. After post-welding dust removal is completed, the cells on the second material unloading device 51 are conveyed by a carrier belt to the dispensing device 56 to sequentially undergo pre-dispensing CCD inspection, dispensing, and post-dispensing CCD inspection, and the cells on the third material unloading device 52 are conveyed by a carrier belt to the dispensing device 57 to sequentially undergo pre-dispensing CCD inspection, dispensing, and post-dispensing CCD inspection. The pre-dispensing CCD inspection is used to detect whether welding is qualified, and if the welding is unqualified, dispensing is directly skipped at the dispensing station. Dispensing is used to reinforce welding strength. The post-dispensing CCD inspection is used to detect whether dispensing is qualified. By providing a plurality of CCD positions, NG products generated in different processes will be accurately distinguished.

Referring to FIGs. 2 and 6, FIG. 6 illustrates a schematic structural diagram of an unloading buffer area according to an embodiment of the present application. The unloading buffer area 53 includes a third gantry gripper 530, a first buffer area 531, a second buffer area 532, a third buffer area (not shown in the figure), and a fourth gantry gripper 533. The first buffer area 531 is used for placement of non-conforming cells welded to top covers from the second material unloading device 51; the second buffer area 532 is used for placement of non-conforming cells welded to top covers from the third material unloading device 52; and the third buffer area is used for placement of conforming welded cells. The first buffer area 531 and the second buffer area 532 are configured as carrier belts (NG cell carrier belts), and the third buffer area is a servo-driven movable buffer position. By distinguishing the first buffer position from the second buffer position, NG conditions of cells on two lines corresponding to the second material unloading device 51 and the third material unloading device 52 will be accurately distinguished, thereby facilitating tracing and device detection. In addition, the vertically overlapped arrangement of the first buffer area 531 and the second buffer area 532 saves space required for NG carrier belts and reserve more space for subsequent model changeover in the factory building.

After dust removal, pre-dispensing CCD inspection, dispensing, and post-dispensing CCD inspection are sequentially completed, the second material unloading device 51 and the third material unloading device 52 continue to convey the cells to the unloading buffer area 53. The third gantry gripper 530 grips welded cells from trays of the second material unloading device 51 and the third material unloading device 52. When a welded cell is an OK cell, the third gantry gripper 530 places the OK cell in the third buffer area, the fourth gantry gripper 533 places the OK cell in the third buffer area to a material unloading area, and the OK cell is to be conveyed for a next process. When a welded cell is an NG cell, the third buffer area moves to expose discharge openings of the NG cell carrier belts. The third gantry gripper 530 places the NG cell on the second material unloading device 51 in the first buffer area 531, and places the NG cell on the third material unloading device 52 in the second buffer area 532. The length of the first buffer area 531 is less than that of the second buffer area 532, and the head portion of the second buffer area 532 is not shielded, such that the NG cells are capable of being placed onto the second buffer area 532.

In summary, the embodiments of the present application provide a control system for cell welding using adapting pieces, which is capable of handling more complicated transmission work of cells with adapting pieces and top covers, and achieves accurate placement of coded top covers onto trays of the magnetic levitation guide rail return line and accurate placement of cells on the incoming-cell conveyor belt onto trays on which top covers have already been loaded, such that the adapting pieces and the top covers are precisely matched, occurrence of welding NG products caused by insufficient matching precision is avoided, and process requirements of aligning cells and cover plates before welding using adapting pieces are satisfied. NG products generated at various parts are timely removed, such that NG products from the previous process are prevented from affecting the product quality of the subsequent process to cause unnecessary material waste, improving overall product quality. In addition, by means of the gripping robots and gantry grippers, flexibility of transferring the top covers and the cells among stations having different heights and different incoming material frequency requirements is achieved.

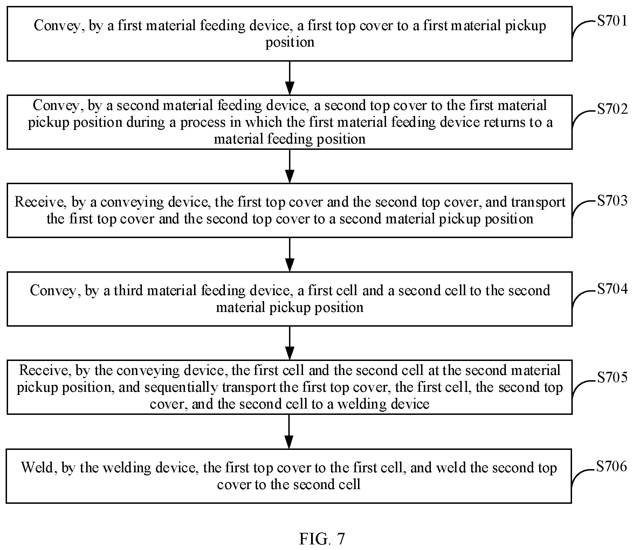

Based on the above control system for cell welding using adapting pieces, the embodiments of the present application provide a control method for cell welding using adapting pieces. The control method is controlled and completed by a controller, and the controller may be a programmable logic controller (PLC). As shown in FIG. 7, the control method includes steps S701 to S706.

In step S701, a first top cover is conveyed to a first material pickup position by a first material feeding device.

In step S702, during a process in which the first material feeding device returns to a material feeding position, a second top cover is conveyed to the first material pickup position by a second material feeding device.

In step S703, the first top cover and the second top cover are received by a conveying device, and the first top cover and the second top cover are transported to a second material pickup position.

In step S704, a first cell and a second cell are conveyed to the second material pickup position by a third material feeding device.

In step S705, the first cell and the second cell are received at the second material pickup position by the conveying device, and the first top cover, the first cell, the second top cover, and the second cell are sequentially transported to a welding device.

In step S706, the first top cover is welded to the first cell, and the second top cover is welded to the second cell by the welding device.

For the first material feeding device and the second material feeding device, reference may be made to the foregoing content. In some embodiments, after the first top cover and the second top cover are conveyed to the first material pickup position, the first top cover and the second top cover are transferred to the conveying device by a first gripping robot. The conveying device receives the first top cover and the second top cover at the first material pickup position, and transports the first top cover and the second top cover to the second material pickup position. After the third material feeding device conveys the first cell and the second cell to the second material pickup position, the conveying device receives the first cell and the second cell at the second material pickup position, and sequentially transports the first top cover, the first cell, the second top cover, and the second cell to the welding device. Subsequently, the welding device welds the first top cover to the first cell and welds the second top cover to the second cell. In this case, a coding device may be disposed at another position on the annular shape of the transport device, or coding is performed on the top cover before feeding of the top cover.

In some embodiments, after the first top cover and the second top cover are conveyed to the first material pickup position, the first top cover and the second top cover are transferred to a coding carrier belt by the first gripping robot. A second gripping device at the tail end of the coding carrier belt transfers the first top cover and the second top cover to the conveying device. The conveying device receives the first top cover and the second top cover at a top cover pickup position, and transports the first top cover and the second top cover to the second material pickup position. After the third material feeding device conveys the first cell and the second cell to the second material pickup position, the conveying device receives the first cell and the second cell at the second material pickup position, and sequentially transports the first top cover, the first cell, the second top cover, and the second cell to the welding device. Subsequently, the welding device welds the first top cover to the first cell and welds the second top cover to the second cell. In this case, the coding device is disposed on the coding carrier belt.

In the embodiments of the present application, after feeding of the top covers and the cells is completed, the top covers and the cells are transported to the welding device by the conveying device, and the top covers and the cells are welded by the welding device. Both the first material feeding device and the second material feeding device are capable of feeding the top covers. During a process in which the first material feeding device completes feeding of the first top cover, removes an empty material tray, and loads a next top cover, the second material feeding device is capable of conveying the second top cover to the first material pickup position. Continuous uninterrupted feeding is achieved through two sets of material feeding devices (the first material feeding device and the second material feeding device), which reduces waiting time for top cover feeding and improves production line efficiency.

In some embodiments, the above method further includes: controlling the coding device to perform coding on the first top cover and on the second top cover before the first top cover and the second top cover are transferred to the conveying device.

Specifically, after the first top cover and the second top cover are conveyed to the first material pickup position, the first gripping robot transfers the first top cover and the second top cover at the first material pickup position to the coding carrier belt, and the coding device is disposed in the running direction of the coding carrier belt. After the first top cover and the second top cover are transferred to the coding carrier belt, the coding device performs coding on the first top cover and on the second top cover. After the coding is completed, the coded first top cover and the coded second top cover are transferred to the conveying device by a second gripping robot. Before the top covers are conveyed to the conveying device, information is coded on the top covers by the coding device, thereby facilitating production management of the top covers and cells.

In some embodiments, after coding is performed on the top covers, the above method further includes: detecting, by a first detection device, whether the coded first top cover and the coded second top cover are conforming products.

Specifically, after the first top cover and the second top cover are conveyed to the first material pickup position, the first gripping robot transfers the first top cover and the second top cover at the first material pickup position to the coding carrier belt. The coding device performs coding on the first top cover and on the second top cover. After the coding is completed, the first detection device detects whether the coded first top cover and the coded second top cover are conforming products. If a coded top cover is an OK product, the second gripping robot places the OK top cover onto the conveying device, and the conveying device transports the OK top cover to the welding device. If a coded top cover is an NG product, the second gripping robot places the NG top cover onto an NG top cover carrier belt, and NG top cover carrier belt removes the NG top cover from the production line. Since the NG top cover generated during coding is timely removed and placed onto the NG top cover carrier belt, a situation in which, during subsequent stacking of cells, OK cells are stacked on NG top covers and become NG products is prevented, thereby avoiding waste of OK cells, and facilitating NG product detection.

In some embodiments, the first top cover or the second top cover each includes a first surface and a second surface, the first surface is a surface facing upward in a vertical direction during coding, and the second surface is a surface facing upward in the vertical direction during welding; and the above method further includes: after performing coding on the first top cover and the second top cover, flipping, by a flipping mechanism, the coded first top cover and the coded second top cover, where after flipping, the second surface is a surface facing upward in the vertical direction.

Specifically, after the first top cover and the second top cover are conveyed to the first material pickup position, the first gripping robot transfers the first top cover and the second top cover at the first material pickup position to the coding carrier belt, and the coding carrier belt sequentially passes through the coding device, the first detection device, and the flipping mechanism. The coding device performs coding on the first top cover and on the second top cover. After the coding is completed, the first detection device detects whether the coded first top cover and the coded second top cover are conforming products, and then the coding carrier belt transports the first top cover and the second top cover to the flipping mechanism. The flipping mechanism sequentially flips the coded first top cover and the coded second top cover, and the second gripping robot sequentially transfers the flipped first top cover and second top cover to the conveying device. In the embodiments of the present application, coding is first performed on the top covers, and then the flipping mechanism is used to perform a flipping operation on the coded top covers, such that process requirements for both top cover welding and top cover coding are simultaneously satisfied.

In some embodiments, flipping, by the flipping mechanism, the coded first top cover and the coded second top cover includes: simultaneously flipping, by the flipping mechanism, the coded first top cover and the coded second top cover.

The flipping mechanism may include a first flipping assembly and a second flipping assembly. The coding carrier belt transports the first top cover and the second top cover to the flipping mechanism. In the flipping mechanism, the first flipping assembly grips the first top cover, and the second flipping assembly grips the second top cover, such that the coded first top cover and the coded second top cover will be simultaneously flipped. The second gripping robot is capable of simultaneously gripping the flipped first top cover and second top cover from the flipping mechanism, and place the first top cover and the second top cover onto the conveying device, thereby achieving rapid transfer of the top covers.

The flipping angle of the flipping mechanism may be 180° or 90°, which is not limited in the present application.

In some embodiments, the conveying device is an annular magnetic drive guide rail. The magnetic drive guide rail allows the incoming materials to be transferred among different stations at a speed as high as possible. Meanwhile, compared with a conventional belt conveyor line, the magnetic drive guide rail has a higher speed and less wear caused by long-term operation.

In some embodiments, trays are placed on the conveying device, and fixing structures corresponding to shapes of the top covers and the cells are formed on the trays. The top covers are placed in grooves of the trays configured to accommodate the top covers, and the cells are placed in grooves of the trays configured to accommodate the cells for fixing the top covers and the cells, thereby achieving precise matching. Before the conveying device transports the first top cover, the second top cover, the first cell, and the second cell to the welding device, the above method further includes: after the second gripping robot grips the top covers, determining whether the trays on the conveying device reach the top cover pickup position; when the trays on the conveying device reach the top cover pickup position, placing, by the second gripping robot, the coded first top cover and the coded second top cover into the trays of the conveying device; when the trays on the conveying device do not reach the top cover pickup position, repeatedly determining whether the trays on the conveying device reach the top cover pickup position; after the cells reach a cell pickup position, determining whether the trays on the conveying device reach the cell pickup position and the top covers have been placed; when the trays on the conveying device reach the cell pickup position and the top covers have been placed in the trays, transferring, by a first gantry gripper, the first cell and the second cell to the trays of the conveying device; otherwise, repeatedly determining whether the trays reach the cell pickup position and the top covers have been placed; then transporting, by the conveying device, the received first top cover, second top cover, first cell, and second cell to the welding device. Therefore, it is ensured that the top covers are accurately placed in the trays on the conveying device, and that the cells are accurately placed in the trays on which the top covers have already been loaded.

In some embodiments, after the top cover is welded to the cell, the above method further includes: transporting, by a second material unloading device, the first cell welded to the first top cover to a first dust removal device; and cleaning, by the first dust removal device, the first cell welded to the first top cover. Specifically, the transport device transports the cell welded to the top cover to a post-welding material unloading area, and the second gantry gripper places the first cell welded to the first top cover onto the second material unloading device. The second material unloading device is a carrier belt, and the carrier belt is provided with the first dust removal device. The carrier belt moves to transport the first cell welded to the first top cover to the first dust removal device, and the first dust removal device cleans the first cell welded to the first top cover. By cleaning welding slag after welding and floating dust generated during material transfer, the cleanliness of the cell is ensured, and the impact of welding slag and floating dust on the quality of the cell will be avoided.

In some embodiments, after the top cover is welded to the cell, the above method further includes: transporting, by a third material unloading device, the second cell welded to the second top cover to a second dust removal device; and cleaning, by the second dust removal device, the second cell welded to the second top cover. Specifically, the transport device transports the cell welded to the top cover to the post-welding material unloading area, and the second gantry gripper places the second cell welded to the second top cover onto the third material unloading device. The third material unloading device is a carrier belt, and the carrier belt is provided with the second dust removal device. The carrier belt moves to transport the second cell welded to the second top cover to the second dust removal device, and the second dust removal device cleans the second cell welded to the second top cover. By providing two sets of cell unloading carrier belts and dust removal devices, the second cell is cleaned while the first cell is cleaned, which will accelerate the production takt time of the device and improve production efficiency.

In some embodiments, the above method further includes: detecting whether the cells welded to the top covers are conforming products; when the first cell welded to the first top cover is a non-conforming product, placing, by a third gripping device, the first cell welded to the first top cover in a first non-conforming product area; when the second cell welded to the second top cover is a non-conforming product, placing, by the third gripping device, the second cell welded to the second top cover in a second non-conforming product area; and when the first cell welded to the first top cover or the second cell welded to the second top cover is a conforming product, placing, by the third gripping device, the first cell welded to the first top cover or the second cell welded to the second top cover in a conforming product area.

A second detection device (e.g., a CCD camera) may be provided on each of the second material unloading device and the third material unloading device, and the second detection device detects whether a welded cell transported by the second material unloading device is a conforming product. When the welded cell transported by the second material unloading device is a non-conforming product, the non-conforming product on the second material unloading device is placed in the first non-conforming product area (a first buffer area) by a third gantry gripper (the third gripping device). In addition, the second detection device detects whether a welded cell transported by the third material unloading device is a conforming product. When the welded cell transported by the third material unloading device is a non-conforming product, the non-conforming product on the third material unloading device is placed in the second non-conforming product area (a second buffer area) by the third gantry gripper. When the welded cell on the second material unloading device or the third material unloading device is a conforming product, the conforming product is placed in the conforming product area (a third buffer area) by the third gantry gripper.

In some embodiments, the second detection device includes a pre-dispensing CCD station and a post-dispensing CCD station, and a dispensing station is provided between the pre-dispensing CCD station and the post-dispensing CCD station. The pre-dispensing CCD inspection detects whether the cell welded to the top cover is a conforming product. When the cell is a conforming product determined by the pre-dispensing CCD inspection, dispensing is performed, and then the post-dispensing CCD inspection is performed. When the post-dispensing CCD inspection determines that the dispensing is qualified, the conforming product is placed in the third buffer area by the third gantry gripper. When the cell is a non-conforming product determined by the pre-dispensing CCD inspection, dispensing is not performed, and the non-conforming product is placed in the first buffer area or the second buffer area by the third gantry gripper. When the post-dispensing CCD inspection determines that the dispensing is unqualified, the non-conforming product is placed in the first buffer area or the second buffer area by the third gantry gripper. By providing a plurality of CCD positions, NG products generated in different processes will be accurately distinguished.

In summary, the control method for cell welding using adapting pieces according to the embodiments of the present application is capable of handling more complicated transmission work of cells with adapting pieces and top covers, and achieves accurate placement of coded top covers onto trays of the magnetic levitation guide rail return line and accurate placement of cells on the incoming-cell conveyor belt onto trays on which top covers have already been loaded, such that the adapting pieces and the top covers are precisely matched, occurrence of welding NG products caused by insufficient matching precision is avoided, and process requirements of aligning cells and cover plates before welding using adapting pieces are satisfied. NG products generated at various parts are timely removed, such that NG products from the previous process are prevented from affecting the product quality of the subsequent process to cause unnecessary material waste, improving overall product quality. In addition, by means of the gripping robots and gantry grippers, flexibility of transferring the top covers and the cells among stations having different heights and different incoming material frequency requirements is achieved.

To achieve the above objective, the embodiments of the present application further provide a device for cell welding using adapting pieces. The device includes: a memory and a processor, the memory stores one or more computer programs, and the processor, when executing the one or more computer programs, implements the above method.

To achieve the above objective, the embodiments of the present application further provide a computer-readable storage medium. The computer-readable storage medium stores one or more computer instructions, and the one or more computer instructions, when executed on a computer, cause the computer to perform the above method.

The computer may be a general-purpose computer, a special-purpose computer, a computer network, or another programmable device. The one or more computer instructions may be stored in a computer-readable storage medium or may be transmitted from a computer-readable storage medium to another computer-readable storage medium. For example, the one or more computer instructions may be transmitted from a website, a computer, a server, or a data center to another website, another computer, another server, or another data center through wired means (for example, a coaxial cable, an optical fiber, or a digital subscriber line (DSL)) or wireless means (for example, infrared communication, wireless communication, or microwave communication). The computer-readable storage medium may be any available medium accessible by a computer, or a data storage device such as a server or a data center including one or more available media. The available medium may be a magnetic medium (for example, a floppy disk, a hard disk, or a magnetic tape), an optical medium (for example, a DVD), or a semiconductor medium. The semiconductor medium may be a solid state drive (SSD).

The above embodiments are only used to illustrate the technical solutions of the present application, but not to limit them. Although the present application has been described in detail with reference to the foregoing embodiments, those of ordinary skill in the art should understand that they may still modify the technical solutions recorded in the foregoing embodiments or make equivalent substitutions for some of the technical features; however, these modifications or substitutions do not make the essence of the corresponding technical solutions deviate from the spirit and scope of the technical solutions in the embodiments of the present application, and should all fall within the scope of protection of the present application.

## Claims

1. A control system for cell welding using adapting pieces, wherein the control system comprises:
a first material feeding device, configured to convey a first top cover to a first material pickup position;
a second material feeding device, configured to convey a second top cover to the first material pickup position during a process in which the first material feeding device returns to a material feeding position;
a third material feeding device, configured to convey a first cell and a second cell to a second material pickup position;
a conveying device, configured to transport the first top cover, the second top cover, the first cell, and the second cell to a welding device; and
the welding device, configured to weld the first top cover to the first cell and weld the second top cover to the second cell.

2. The control system according to claim 1, wherein the conveying device is annular, and the first material feeding device, the second material feeding device, the third material feeding device, and the welding device are sequentially disposed on different side surfaces of the conveying device in a running direction of the conveying device.

3. The control system according to claim 2, wherein a first tray and a second tray are disposed on the conveying device, the first tray is configured to fix the first top cover and the first cell, the second tray is configured to fix the second top cover and the second cell, and the first tray and the second tray sequentially pass through the first material pickup position; and after the first tray receives the first top cover and the second tray receives the second top cover, the first tray and the second tray sequentially pass through the second material pickup position, the first tray receives the first cell, and the second tray receives the second cell.

4. The control system according to claim 1, wherein the control system further comprises a coding device and a coding carrier belt;
the coding carrier belt is disposed between the first material pickup position and the conveying device;
the coding device is disposed in a running direction of the coding carrier belt; and
the coding device is configured to code information of the first top cover and code information of the second top cover.

5. The control system according to claim 4, wherein the control system further comprises:
a first detection device, configured to detect whether the coded first top cover and the coded second top cover are conforming products; and
the coding carrier belt sequentially passes through the coding device and the first detection device in the running direction.

6. The control system according to claim 5, wherein the control system further comprises:
a first material unloading device, configured to place non-conforming coded top covers detected by the first detection device,
the first material unloading device being disposed at a tail portion of the coding carrier belt and adjacent to the coding carrier belt.

7. The control system according to any one of claims 4 to 6, wherein the control system further comprises:
a first gripping device, configured to place the first top cover and the second top cover located at the first material pickup position onto a coding carrier belt; and
a second gripping device, configured to transfer the coded first top cover and the coded second top cover to the conveying device.

8. The control system according to claim 7, wherein the first top cover or the second top cover each comprises a first surface and a second surface, the first surface is a surface facing upward in a vertical direction during coding, and the second surface is a surface facing upward in the vertical direction during welding; and the control system further comprises:
a flipping mechanism, configured to flip the coded first top cover and the coded second top cover, wherein after flipping, the second surface is a surface facing upward in the vertical direction;
the second gripping device, specifically configured to transfer the flipped coded first top cover and the flipped coded second top cover to the conveying device,
the flipping mechanism being disposed below the second gripping device.

9. The control system according to claim 8, wherein the flipping mechanism is specifically configured to simultaneously flip the coded first top cover and the coded second top cover.

10. The control system according to claim 8 or 9, wherein a flipping angle of the flipping mechanism is 180°.

11. The control system according to claim 1, wherein the control system further comprises a first dust removal device and a second material unloading device;
the second material unloading device is configured to transport the first cell welded to the first top cover;
the first dust removal device is disposed on a transport path of the second material unloading device; and
the first dust removal device is configured to clean the first cell welded to the first top cover.

12. The control system according to claim 11, wherein the control system further comprises a second dust removal device and a third material unloading device;
the third material unloading device is configured to transport the second cell welded to the second top cover;
the second dust removal device is disposed on a transport path of the third material unloading device; and
the second dust removal device is configured to clean the second cell welded to the second top cover.

13. The control system according to claim 12, wherein the control system further comprises:
a third gripping device, configured to place non-conforming cells welded to top covers from the second material unloading device in a first non-conforming product area, and place non-conforming cells welded to top covers from the third material unloading device in a second non-conforming product area; and
the first non-conforming product area and the second non-conforming product area are vertically arranged in an overlapping manner, and the first non-conforming product area and the second non-conforming product area are located at tail portions of the transport paths of the second material unloading device and the third material unloading device and are arranged perpendicular to the second material unloading device and the third material unloading device.

14. The control system according to claim 13, wherein the control system further comprises:
the third gripping device, further configured to place conforming cells welded to top covers from the second material unloading device and the third material unloading device in a conforming product area.

15. A control method for cell welding using adapting pieces, wherein the method comprises:
conveying, by a first material feeding device, a first top cover to a first material pickup position;
conveying, by a second material feeding device, a second top cover to the first material pickup position during a process in which the first material feeding device returns to a material feeding position;
receiving, by a conveying device, the first top cover and the second top cover, and transporting the first top cover and the second top cover to a second material pickup position;
conveying, by a third material feeding device, a first cell and a second cell to the second material pickup position;
receiving, by the conveying device, the first cell and the second cell at the second material pickup position, and sequentially transporting the first top cover, the first cell, the second top cover, and the second cell to a welding device; and
welding, by the welding device, the first top cover to the first cell, and welding the second top cover to the second cell.

16. The method according to claim 15, wherein the method further comprises:
controlling a coding device to perform coding on the first top cover and on the second top cover before the first top cover and the second top cover are transferred to the conveying device.

17. The method according to claim 16, wherein the method further comprises:
detecting, by a first detection device, whether the coded first top cover and the coded second top cover are conforming products.

18. The method according to claim 17, wherein the method further comprises:
when a coded top cover is a conforming product, transporting, by the conveying device, the coded top cover to the welding device; and
when a coded top cover is a non-conforming product, transferring the non-conforming coded top cover to a first material unloading device.

19. The method according to any one of claims 16 to 18, wherein the coding device is disposed in a running direction of a coding carrier belt, and the method further comprises:
placing, by a first gripping device, the first top cover and the second top cover located at the first material pickup position onto the coding carrier belt; and
transferring, by a second gripping device, the coded first top cover and the coded second top cover to the conveying device.

20. The method according to claim 16, wherein the first top cover or the second top cover each comprises a first surface and a second surface, the first surface is a surface facing upward in a vertical direction during coding, and the second surface is a surface facing upward in the vertical direction during welding; and the method further comprises:
after performing coding on the first top cover and the second top cover, flipping, by a flipping mechanism, the coded first top cover and the coded second top cover, wherein after flipping, the second surface is a surface facing upward in the vertical direction.

21. The method according to claim 20, wherein flipping, by the flipping mechanism, the coded first top cover and the coded second top cover comprises:
simultaneously flipping, by the flipping mechanism, the coded first top cover and the coded second top cover.

22. The method according to claim 20 or 21, wherein a flipping angle of the flipping mechanism is 180°.

23. The method according to claim 15, wherein the method further comprises:
transporting, by a second material unloading device, the first cell welded to the first top cover to a first dust removal device; and
cleaning, by the first dust removal device, the first cell welded to the first top cover.

24. The method according to claim 23, wherein the method further comprises:
transporting, by a third material unloading device, the second cell welded to the second top cover to a second dust removal device; and
cleaning, by the second dust removal device, the second cell welded to the second top cover.

25. The method according to claim 24, wherein the method further comprises:
detecting whether the first cell welded to the first top cover or the second cell welded to the second top cover is a conforming product;
when the first cell welded to the first top cover is a non-conforming product, placing, by a third gripping device, the first cell welded to the first top cover in a first non-conforming product area;
when the second cell welded to the second top cover is a non-conforming product, placing, by the third gripping device, the second cell welded to the second top cover in a second non-conforming product area; and
when the first cell welded to the first top cover or the second cell welded to the second top cover is a conforming product, placing, by the third gripping device, the first cell welded to the first top cover or the second cell welded to the second top cover in a conforming product area.
